# EUROPEAN PATENT SPECIFICATION

(11) **EP 3 680 085 B1**
(45) Date of publication and mention of the grant of the patent: **25.06.2025**
(21) Application number: 19219853.9
(22) Date of filing: 27.12.2019
(51) Int. Cl.: B29C 48/154, B29C 48/21, B29C 48/07, B32B 38/06, B32B 38/10, B32B 27/06, B32B 27/08, B29C 39/14

(54) **DECORATIVE HIGH PRESSURE LAMINATE (HPL) PANEL**
DEKORATIVE HOCHDRUCKSCHICHTPLATTE (HPL)
PANNEAU STRATIFIÉ HPL DÉCORATIF

(30) Priority: 11.01.2019 NL 2022381
(43) Date of publication of application: 15.07.2020
(73) Proprietor: Trespa International B.V., 6002 SM Weert (NL)
(72) Inventor: KÖMHOFF, Henricus Hubertus Maria, 6002 SM Weert (NL)
(74) Representative: Algemeen Octrooi- en Merkenbureau B.V.

(56) References cited:
- EP-A1- 2 181 845
- EP-A1- 2 990 195
- WO-A1-03/095202
- WO-A1-2005/002830
- JP-A- H0 478 535
- KR-A- 20080 065 368

## Description

The present invention relates to a decorative high pressure laminate (HPL) panel.

Décors as such are known in the market. Decorative thermoset laminates have been known for many years and, conventionally, they may comprise several layers. A decorative thermoset laminate may consist of, for example, three layers, i.e. a functional surface layer, a decorative layer beneath the functional surface layer and a rigidity imparting core layer supporting the superimposed decorative and surface layer(s). As an example, the functional surface layer may provide a wear resistance function or a weather resistance function. The decorative layer usually comprises a thermoset resin impregnated printed or plain coloured decorative paper sheet. The rigidity imparting core layer usually comprises one or a plurality of superimposed thermoset phenol-formaldehyde resin impregnated kraft paper sheets, the number and thickness of the sheets being selected so that the finished laminate possesses the required thickness and rigidity.
Such laminates are conventionally prepared by forming a stack of the component layers with the resins in the thermosettable form and then consolidating a plurality of like stacks to unitary thermoset structures by means of heat and pressure in a hydraulic press. Commonly the consolidation is performed using flexible release sheets whose purpose is to enable the consolidated laminate to be separated from the press-plates and the adjacent laminates, and, by providing the release sheets employed with an appropriate surface finish, laminates with a complementary surface may be produced directly.

It is known to prepare laminates having embossed surfaces by performing the consolidation by means of a press-plate having an embossed surface complementary to that desired to the product laminate and it is common to use an embossed press-plate to provide a decorative laminate having desired surface contours in conjunction with a release sheet which provides the desired surface texture. Registered embossed decorative laminates have an embossed surface and comprise a decorative sheet wherein the sheet is a fibrous sheet such as a paper, wood or fabric sheet and wherein the embossments are in register with a print pattern on the paper or fabric, the grain pattern of the wood sheet or the weave and/or coloured pattern of the fabric.

Such laminates comprising a pre-embossed decorative paper sheet are known from British application GB 2088280. From that document a decorative registered embossed thermoset laminate is known, comprising a core layer, being one or plurality of, thermoset phenolic resin impregnated paper sheets, a decorative layer, being a pre-embossed noble resin impregnated decorative paper sheet bearing a printed pattern and wherein the embossments are in register with the printed pattern and the resin is substantially fully cured to the thermoset state, and
a wear surface layer, comprising a noble thermoset resin composition which layer conforms to the contours of said pre-embossed noble resin impregnated decorative paper sheet. This British application GB 2088280 also discloses a method for forming an assembly comprising a stack and a deformable thermoplastic or elastomeric press-pad adjacent the decorative sheet or wear surface layer of that stack, applying heat and pressure to the assembly so as to cause the press-pad to conform to the pre-embossed paper sheet and to consolidate the stack to form a unitary structure and to convert the thermosettable resins to the thermoset state, and removing the deformable pad to provide an embossed thermoset decorative laminate, wherein the contours of the decorative surface conform to those of the pre-embossed noble resin impregnated decorative paper sheet. This method comprises a step of eembossing and pre-curing melamine décor and press it (in a second step) to a kraft core by using a deformable padding between the flat press plate and the "pre-embossed" décor.

WO 03/006232 relates to a method of fabricating laminated materials having decorative motifs and surface textures that are mechanically embossed in registration with the decorative motifs. Such a method of fabricating laminated materials, comprising: locating a resin soaked sheet having a decorative motif on a board; placing the resin soaked sheet and board into a press machine having a press plate with a three dimensional surface; and curing the resin at a predetermined temperature while pressing the resin soaked sheet and board with the press plate at a predetermined pressure such that a laminated product is produced; wherein the produced laminated product has a surface texture that is embossed in registration with the decorative motif. Such a method is thus concerned with a step of ppressing a registered texture into a panel and aligning décor and press plate, wherein for alignment a reference edge is cut into core-panel.

WO 80/02531 relates to a two-tone registered embossed laminate employing a melamine-formaldehyde saturated kraft sheet coated with a pigmented melamine-formaldehyde resin as a replacement for standard decor and overlay sheets. Such a heat and pressure consolidated laminate of registered embossment and color contrast consists of, in superimposed relationship, a core layer wherein said core layer consists of a self-supporting substrate, a kraft paper sheet impregnated with a first thermoset resin, and a surface coating wherein said surface coating consists of a pigmented, second thermoset resin positioned above the kraft paper sheet, the surface of said laminate containing an embossment consisting of protuberances and valleys each of which are of a color, the color of said kraft paper sheet being primarily evidenced at the valleys thereof and the color of said second resin being primarily evidenced at the protuberances thereof. Such a method is thus concerned with printing/coating a design on a kraft paper that is in register with the texture on the press plate and for printing a thickened coloured melamine resin is used.

US 3,802,947 relates to a method by which an embossed temporary or transfer laminate is produced which is then provided with color in association with the embossed portions, and wherein the embossed and coloured temporary laminate is then used in a high pressure laminating procedure wherein the previously embossed and coloured element is transferred from its temporary support to form the Such a method thus applies an upper surface of the high pressure laminate having registered embossing and color and uses a step of printing on embossed pre cured overlay, wherein in a second step the pre cured overlay is pressed onto a panel.

US 2014/335216 relates to a method of manufacturing a web-shaped matrix for the production of surface materials, particularly surfaces during the production of laminate panels, wherein a structured surface is provided with a flexible carrier web layer and a layer separating from the surface material arranged on the side of the surface material, wherein the structured surface is arranged on the side of the separating layer facing away from the surface material. This application is thus concerned with a web-shaped matrix at the back side of a release paper/foil to create texture while pressing a panel.

EP 2 181 845 relates to a method of manufacturing a decoration sheet, which includes: applying a coating solution including a photo-curable or thermo-curable resin composition on one surface of a transparent layer including PETG, so as to produce a coating layer; curing the coating layer while the coating layer is kept in contact with a roll or mold having an embossed pattern; and forming a colored film on the cured coating layer. Thus, after the curing process, a colored film that is capable of providing or improving the appearance and mirror effect of the decoration sheet is laminated on the embossed pattern. The colored film is formed by an extruding or calendaring process, and the like may be laminated on the embossed pattern using thermal lamination or an adhesive. Such a colored film is used to improve an aesthetic aspect or the mirror surface effect of the decoration sheet. The colored film is a polyvinyl chloride film or polyester film manufactured by adding various organic or inorganic pigments or dyes, or pearl to provide colors. Such a film may be manufactured by extruding, pressing or calendering resin compositions in which polyvinyl chloride or polyester is mixed with various additives. The colored film may have a thickness of about 0.05 mm to 0.5 mm.

JP H04 78535 relates to a method for manufacturing a decorative sheet with excellent design effect and surface properties such as wear resistance and hardness by forming a UV curable resin layer prepared by transferring an uneven emboss pattern formed on a transparent thermoplastic film on the surface of a printing sheet.

WO 2005/002830 relates to a process for the production of a plastics article with a microstructured surface via production of a composite comprised of a backing layer comprised of a thermoplastic or thermoelastic with one or more structure layers, wherein the structure layer(s) obtain microstructuring via known structuring processes, after production of the composite, wherein the composite of backing layer and structure layer is generated via coextrusion, application of the structure layer to the backing layer by lamination, or application of the structure layer to the backing layer by lacquering.

WO 03/095202 relates to a method for producing a directly laminated plate or board by hot-pressing, comprising the steps of arranging a resinous intermediate ply adhesive layer on a surface of a core of wood material core, arranging a decorative paper layer on the intermediate ply adhesive layer, the decorative layer having a graphic representation of a surface of an imitated material, arranging a resin-impregnated transparent cover layer bearing a relief-like reproduction of the graphic representation on the decorative layer so that the relief-like reproduction aligns with the graphic representation on the decorative layer, thereby yielding a structure comprising the following: the resin-impregnated transparent cover layer on top of the decorative paper layer, the decorative paper layer on top of the resinous intermediate ply adhesive layer, the intermediate ply adhesive layer on top of the wood material core material, and the wood material core material, hot-pressing the layers together in a single pressing step so that the layers are bonded together and the relief-like representation on the transparent cover layer corresponds to the graphic representation of the decorative layer, wherein the intermediate ply adhesive layer allows for flexibility of the decorative paper layer so as to prevent crushing of the decorative paper layer by the core.

EP 2 990 195 relates to a multi-layered composite film, comprising at least immediately consecutive and mutually bonded layers, i.e. on the visible side, a polymer layer comprising 1 to 100% by weight of extrudable thermoplastic polyurethane-containing polymer and/or ionomer, a tie layer comprising one or more modified plastics for the tie, and on the substrate side, a decorative layer, wherein the layered composite is coextruded from the first two layers and hot-melt laminated with the decorative substrate layer at a temperature above the fusion temperature of the layered composite, while simultaneously one or more patterns is/are plastically embossed on the visible side of the multi-layered composite film in the same step.

The above discussed documents all relate to a specific position of the texture, i.e. on the surface of the panel.

An object of the present invention is to provide a method of fabricating a décor wherein the place of the texture is in the interlayer boundary of the coatings of the décor.

An object of the present invention is to provide a method of fabricating a panel having a flat outer surface provided with a décor having an internal texture.

An object of the present invention is to provide a method of fabricating a panel having a flat outer surface provided with a décor having an internal texture, the internal texture showing a visual 3D effect.

The present invention thus relates to a decorative high pressure laminate (HPL) panel, comprising an outermost décor layer and a core layer, wherein the outermost décor layer comprises a décor manufactured according to a method of fabricating a decor, comprising the following steps:
i) providing a substrate;
ii) apply a first liquid curable coating onto said substrate of i);
iii) placing an element having a structured surface onto said liquid coating of ii);
iv) curing the first liquid curable coating resin while contacting the element with the liquid curable coating such that an intermediate product is produced, wherein the cured coating of the produced intermediate product has a surface texture that is embossed with the structured surface of the element;
v) removing the element having the structured surface;
vi) apply a second liquid curable coating onto the surface texture of the intermediate product;
vii) curing the product of vi) such that the surface texture obtained in iv) is embedded in the cured second coating.

The present method as discussed above meets one or more of the afore mentioned objects. The application of a first liquid curable coating onto a substrate and the intimate contact between an element having a structured surface and the still liquid coating has the effect that the structured surface of the element is transferred into the first liquid curable coating. By curing, especially partly curing, the first liquid curable coating resin while still in close contact with the element having a structured surface the coating is cured such that an intermediate product is produced. The cured coating of the produced intermediate product has a surface texture that is embossed with the structured surface of the element, i.e. a negative reproduction. After removing the element having the structured surface from the intermediate product the negative reproduction is subsequently covered by the application of a second liquid curable coating onto the surface texture of that intermediate product. The composite structure thus created, namely substrate, structured first coating and second liquid curable coating, is subsequently fully cured. The final décor thus obtained can be identified as a décor having an integrated structure. The term "integrated structure" means that the structure of the first coating is enclosed by the substrate on one side and by the second coating on the other side. In other words, the first coating is positioned on the substrate and embedded in the cured second coating. The first coating thus forms an embossed pattern layer on the substrate. The embossed pattern layer is covered by the second coating and that second coating forms an even surface layer on the first coating such that the first coating is positioned on the substrate and embedded in the cured second coating. By applying a second liquid curable coating onto the surface texture of the intermediate product, i.e. the substrate having a first coating with a specific surface texture, the second liquid curable coating will flow and spread out over the surface structure thereby filling and covering the surface structure. In the present method the second coating is applied as a liquid curable coating and not as a film or laminate.

In a preferred embodiment of the present invention step vi) includes the application of a release layer, the release layer being provided with the second liquid curable coating, such that the second liquid curable coating is in contact with the surface texture of the intermediate product. In such an embodiment the release layer provides additional protection to the cured second coating, especially during the press cycle for making panels. Furthermore, the use of a release layer provided with the second liquid curable coating enables a much easier handling of the materials. In addition, such a product, i.e. the release layer provided with the second liquid curable coating, can be manufactured in another process and stored. In addition, specific grades, qualities and compositions of the release layer provided with the second liquid curable coating can be manufactured.

In a preferred embodiment of the present invention a further step viii) is provided of removing the release layer from the product cured in step vii). Such a release layer provides protection of the décor during transport and further processing, especially during the press cycle of the panel. When the final panel is ready for installation, the release layer may be removed from the product.

In a preferred embodiment of the present invention the element having a structured surface is chosen from the group of textured foil and textured paper.

In a preferred embodiment of the present invention the first liquid curable coating comprises pigments, preferably one or more metallic pigments. As discussed above, the first coating is positioned on the substrate and embedded in the cured second coating. By providing a pigmented first coating a 3D effect will be obtained, especially initiated through reflection and orientation of the pigments in combination with the texture of that first coating.

In a preferred embodiment of the present invention the second liquid curable coating is a transparent liquid curable coating. Such a transparent coating enables the emission of the light reflected by the first coating, due to its composition and texture.

In a preferred embodiment of the present invention the curing in step iv) is a step of partially curing the first liquid curable coating. This step of partially curing will lead to a "freeze" of the texture into the first coating. The benefit thereof is that the element having the structured surface can be easily removed from the first coating without disturbing or damaging the texture of that first coating. In addition, the freezing enables transport of the substrate provide with the structured coating.

In a preferred embodiment of the present invention the first and second liquid curable coating comprise components chosen from the group of thermal and radiation curable components, preferably selected from the group of electron beam curable resins and UV-curable resins. These resins have resulted in solid and dimensional stable coatings which are essential requirements for its use in high pressure panels and laminates. When using EB (Electron Beam) radiation curing typically a voltage of 100-300kV and a dose of 5 - 100kGy is applied.

In a preferred embodiment of the present invention the curing in step vi) is a step of fully curing the first liquid curable coating and the second liquid curable coating.

Preferred examples of the second liquid curable coating are coatings comprising components chosen from the group of (meth) acrylates, urethanes and phenol formaldehyde resins, or combinations thereof.

In a preferred embodiment of the present invention one or more additional layers of liquid curable coatings are applied on the product obtained after vii) and subsequently cured.

In a preferred embodiment of the present invention the outer surface of the product obtained after step vii) is even, especially flat. Such a shape is preferred for its further use, for example interior and exterior applications.

In a preferred embodiment of the present invention the first liquid curable coating is applied in step ii) in a thickness of 20 - 150 g/m². A thickness less than 20 g/m² will not result into a coating in which a textured structure can be obtained. The present inventors found that the thinner the first liquid curable coating layer is, the lower the 3D effect that can be created. In a layer having a thickness of <20g/m² only a very limited texture can be obtained. And a thickness more than 150 g/m² may lead to a final décor which is too rigid to be used in a final panel press operation

In a preferred embodiment of the present invention the first liquid curable coating is a solvent free curable coating. A benefit of such a type of coating is that unwanted evaporation effects, such as crimp and the formation of bubbles and wrinkles, can be prevented.

In a preferred embodiment of the present invention the second liquid curable coating is applied in step iv) in a thickness of 10 - 100 g/m². A thickness less than 10 g/m² will lead to a situation in which a full coverage of the textured structure cannot be obtained. And a thickness of more than 100 g/m² may lead to a final décor which is too rigid to be used in a final panel press operation

In a preferred embodiment of the present invention the substrate according to step i) comprises a paper substrate chosen from the group of kraft paper and décor paper, preferably in a weight range > 40 g/m² and < 260 g/m², more preferably < 150 g/m². The ranges mentioned here provide a substrate that can be easily positioned and handled in a coating line. In addition, the décor thus obtained is of a flexible character, even provided with its coating layer(s). An example of a substrate to be used in the present invention is a décor paper impregnated with thermosetting resins. Other examples of a substrate to be used in the present invention are metallic foils, such as aluminium foils, and polymeric foils, such as polycarbonate foils.

In a preferred embodiment of the present invention the element having the structured surface according to step ii) is chosen from the group of textured paper, thermoplastic foil and metal foil, wherein the structured surface is preferably applied to the element via a technique chosen from the group of by printing, coating, brushing, calendaring, embossing or pressing, or any combination thereof, in a depth of 2 -200 micrometre.

In a preferred embodiment of the present invention there is an additional a step of applying a third liquid curable coating onto the cured second coating of the composite obtained in vii), placing an element having a structured surface onto the third liquid curable coating, and curing the third liquid curable coating resin while contacting the element with the third liquid curable coating, wherein the third cured coating has a surface texture that is embossed with the structured surface of the element. In another embodiment the application of even a fourth, fifth etc layer is possible. These layers may have different compositions, properties and functionalities.

The present invention furthermore discloses a décor comprising of, successively, a substrate, a cured first coating having a surface texture, a cured second coating, wherein the surface texture of the first coating is embedded in the cured second coating.

In a preferred embodiment of the present invention the cured second coating is provided with a release layer.

In a preferred embodiment of the present invention the outer surface of the cured second coating is even, especially flat.

In a preferred embodiment of the present invention the cured first coating comprises pigments, preferably metallic pigments.

In a preferred embodiment of the present invention the cured second coating is transparent.

The present invention furthermore discloses a thermopressed panel comprising a décor as discussed above or a décor obtained according to the method as discussed above.

The present invention thus relates to a decorative high pressure laminate (HPL) panel, comprising an outermost décor layer and a core layer, wherein the outermost décor layer comprises a décor manufactured according to a method according to the present invention.

Methods for manufacturing decorative HPL panels have been disclosed in, inter alia, US Patent No. 4,801,495, US 4,789,604, US Patent application 2013/0078437. The relevant parts disclosed in these publications regarding the process conditions for manufacturing these HPL panels should be incorporated here by reference.

In the present decorative panel the core layer preferably comprises a thermo pressed stack of resin impregnated papers, for example phenol resin impregnated papers. According to another embodiment prepregs, non-wovens and wovens of wood fibres, glass fibres, textile fibres, synthetic fibres, metallic fibres, ceramic fibres, carbon fibres, or a mixture thereof, can be used to partly or completely replace the paper in the resin impregnated stack. In yet another embodiment the resin impregnated paper can be replaced by a prepreg. Such a prepreg can be considered as a consolidated core of a fibre containing material comprised of wood or cellulose fibres which are coated with a thermosetting synthetic resin. The thickness of prepregs may be considerable larger than a typical paper, and may include thicknesses > 1 cm, or even greater.

A method for manufacturing prepregs has been disclosed in US 4, 503,115 and US 6,387,489 in the name of the present applicant. For example according to US 6,387,489 after drying the fibres are stored or passed directly to spreader equipment. The resin-treated fibres may be further processed without or with pigments. The mixture made from resin-treated fibres and pigments is introduced to spreader equipment which deposits the fibres and the pigments continuously and uniformly with random orientation, producing, distributed across the entire width of a horizontal conveyor belt, a web-like mat, which is press-molded either individually or together with other web-like mats of this type, to form the core layer. After continuous shaping of the mat on the conveyor belt, using scrapers, brushes, belts or rollers, the prepreg is given a preliminary press-moulding and compacted, with thickness reduction, in calendering equipment.

Further advantages of the invention will become apparent by reference to the detailed description of preferred embodiments. Although the figures shown here only mention a two layer coating system, namely a first coating and a second coating, the present invention is not restricted to a specific number of coating layers.

The present invention will be discussed in detail hereafter. The example does not form any limitation on the scope of the invention.

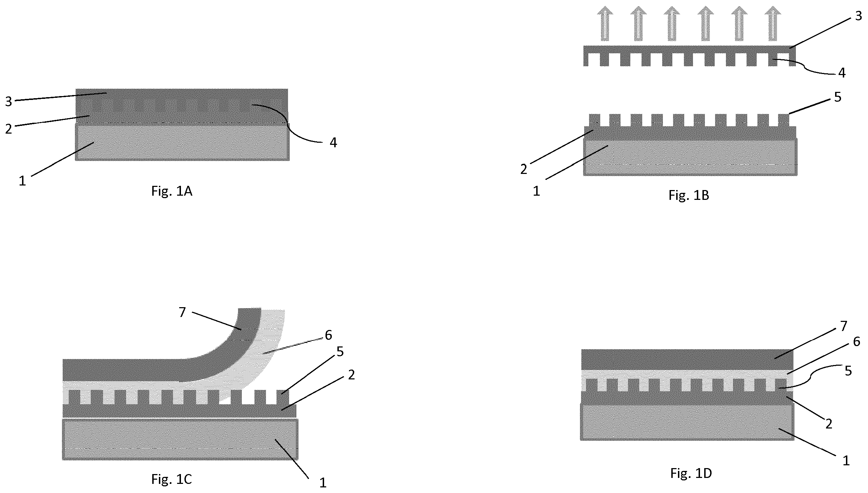

Figure 1A-1D shows an embodiment of the method of fabricating a décor according the invention. In Fig 1A a substrate 1 is provided with a first liquid curable coating 2. Onto first liquid curable coating 2 is positioned an element 3 having a structured surface 4. Element 3 is in close contact with first liquid curable coating 2. The curing of first liquid curable coating resin 2 takes place while contacting element 3 with liquid curable coating 2 such that an intermediate product is produced, shown in the lower part of Figure 1B. The lower part of Figure 1B can be identified as a so called basis décor, i.e. substrate 1 provided with cured coating 2, wherein coating 2 is provided with texture 5. Texture 5 is the negative of structured surface 4. Thus, cured coating 2 of the produced intermediate product has a surface texture 2 that is embossed with the structured surface of the element 3. In Figure 1B one can see that element 3 having the structured surface 4 is removed. In Figure 1C a second liquid curable coating 6 is applied onto the surface texture 5 of the intermediate product. In Figure 1C the second liquid curable coating 6 is in contact with release layer 7. After applying coating 6 onto the surface texture 5 of the intermediate product a décor with an internal structure is obtained, see Figure 1D. The final step is to cure the product shown in Figure 1D such that the surface texture 5 is embedded in the cured second coating 6. In a preferred embodiment the first liquid curable coating 2 comprises pigments (not shown), preferably one or more metallic pigments. The first coating 2 is positioned on the substrate 1 and embedded in the cured second coating 6. By providing a pigmented first coating 2 a 3D effect will be obtained, especially initiated through reflection and orientation of the pigments in combination with the texture of that first coating 2.

### Example1

In this example the process for producing a décor with embedded surface texture comprises a step of providing a substrate, applying a first coat layer and laminating a textured paper into the still liquid coat. As substrate an impregnated 80g/m² kraft paper is used. The kraft paper is impregnated with 60g/m² phenol-formaldehyde resin. The applied coat for first layer is pigmented (white). Because of the covering strength of the white coat a layer ≥60 micrometre is required for getting the right colour. Applied layer thickness for first coat layer in example 1 is 70 micrometre. The texture paper laminated into the coat has a texture with a depth of approximately 5 micrometre. The coat layer thickness is higher compared to texture depth. There is an abundance of coat available for completely fill and embed the texture. The coat layer is cured by EB (electron beam) at 175kV and a dose of 7kGy. After curing the texture paper is removed and a second coat layer is applied. As second coat layer a 23 micrometre thick transparent polyurethane acrylate coat is applied. To create the desired gloss level a foil is laminated in the still wet coat of the second layer. In this sample a medium gloss foil (so called "Satin") is used. After lamination the décor is cured by EB at 175kV and 60kGy dose. The décor is pressed to a HPL panel using standard HPL process conditions, core materials and press plates. In this example 1 a press plate without any texture is used. This results in a panel having a visual perception of a texture (from texture in first layer) and at the same time having a flat surface and soft touch.

### Example 2

The same steps for producing a décor with embedded surface texture as disclosed in example 1 were carried out, except that for the first coat layer a 50 micrometre metallic coloured coat is used. Because of the texture dependent orientation of the metallic particles in that first coat the visibility of the texture in the first coat layer will be strongly amplified.

### Example 3

The same steps for producing a décor with embedded surface texture as disclosed in example 2 were carried out, except that a texturized press plate was used in producing the HPL panel. The result thereof is a panel having a texturized outer surface. This outer surface texture is superimposed on top of the visual perception of texture from the first coat layer.

## Claims

1. A decorative high pressure laminate (HPL) panel, comprising an outermost décor layer and a core layer, wherein the outermost décor layer comprises a décor manufactured according to a method of fabricating a decor, comprising:
i) providing a substrate;
ii) apply a first liquid curable coating onto said substrate of i);
iii) placing an element having a structured surface onto said liquid coating of ii);
iv) curing the first liquid curable coating resin while contacting the element with the liquid curable coating such that an intermediate product is produced, wherein the cured coating of the produced intermediate product has a surface texture that is embossed with the structured surface of the element;
v) removing the element having the structured surface;
vi) apply a second liquid curable coating onto the surface texture of the intermediate product;
vii) curing the product of vi) such that the surface texture obtained in iv) is embedded in the cured second coating.

2. A decorative high pressure laminate (HPL) panel according to claim 1, wherein step vi) includes the application of a release layer, the release layer being provided with the second liquid curable coating, such that the second liquid curable coating is in contact with the surface texture of the intermediate product, wherein especially said method further comprises a step viii) of removing the release layer from the product cured in step vii).

3. A decorative high pressure laminate (HPL) panel according to any one of claims 1-2, wherein the first liquid curable coating comprises pigments, preferably one or more metallic pigments, wherein especially the second liquid curable coating is a transparent liquid curable coating.

4. A decorative high pressure laminate (HPL) panel according to any one of claims 1-3, wherein the curing in step iv) is a step of partially curing the first liquid curable coating.

5. A decorative high pressure laminate (HPL) panel according to any one of claims 1-4, wherein the first liquid curable coating comprises components chosen from the group of thermal and radiation curable components, preferably selected from the group of electron beam curable resins and UV-curable resins, wherein the second liquid curable coating comprises radiation curable components selected from the group of electron beam curable resins and UV-curable resins, said second liquid curable coating preferably comprising components chosen from the group of (meth)acrylates, urethanes and phenol formaldehyde resins, or combinations thereof, wherein especially the first liquid curable coating is a solvent free curable coating.

6. A decorative high pressure laminate (HPL) panel according to any one of claims 1-5, wherein the curing in step vi) is a step of fully curing the first liquid curable coating and the second liquid curable coating.

7. A decorative high pressure laminate (HPL) panel according to any one of claims 2-6, wherein the outer surface of the product obtained after step vii) is even, especially flat.

8. A decorative high pressure laminate (HPL) panel according to any one of claims 1-7, wherein in step ii) the first liquid curable coating is applied in a thickness of 20 - 150 g/m², wherein in step vi) the second liquid curable coating is applied in a thickness of 10 - 100 g/m².

9. A decorative high pressure laminate (HPL) panel according to any one of claims 1-8, wherein in step i) the substrate is chosen from the group of metallic foil, such as aluminium foil, polymeric foil, such as polycarbonate foil, and paper substrate, especially a paper substrate chosen from the group of kraft paper and décor paper, preferably in a weight range > 40 g/m² and < 260 g/m², more preferably < 150 g/m².

## Patentansprüche

1. Dekoratives Hochdrucklaminat(HPL)-Paneel umfassend eine äußerste Dekorschicht und eine Kernschicht, wobei die äußerste Dekorschicht ein Dekor umfasst, das hergestellt ist durch ein Verfahren zur Herstellung eines Dekors umfassend:
i) Bereitstellen eines Substrats;
ii) Aufbringen einer ersten flüssigen härtbaren Beschichtung auf das Substrat von i);
iii) Platzieren eines Elements mit einer strukturierten Oberfläche auf die flüssige Beschichtung von ii);
iv) Härten des ersten flüssigen härtbaren Beschichtungsharzes während Kontakt des Elements mit der flüssigen härtbaren Beschichtung, so dass ein Zwischenprodukt erzeugt wird, wobei die gehärtete Beschichtung des erzeugten Zwischenprodukts eine Oberflächentextur aufweist, die mit der strukturierten Oberfläche des Elements geprägt ist;
v) Entfernen des Elements mit der strukturierten Oberfläche;
vi) Aufbringen einer zweiten flüssigen härtbaren Beschichtung auf die Oberflächentextur des Zwischenprodukts;
vii) Härten des Produkts von vi), so dass die bei vi) erhaltene Oberflächentextur in die gehärtete zweite Beschichtung eingebettet wird.

2. Dekoratives Hochdrucklaminat(HPL)-Paneel nach Anspruch 1, wobei Schritt vi) das Aufbringen einer Trennschicht enthält, wobei die Trennschicht mit der zweiten flüssigen härtbare Beschichtung versehen ist, so dass die zweite flüssige härtbare Beschichtung in Kontakt mit der Oberflächentextur des Zwischenprodukts steht, wobei das Verfahren insbesondere ferner einen Schritt viii) des Entfernens der Trennschicht von dem bei Schritt vii) gehärteten Produkt umfasst.

3. Dekoratives Hochdrucklaminat(HPL)-Paneel nach einem der Ansprüche 1-2, wobei die erste flüssige härtbare Beschichtung Pigmente, vorzugsweise ein oder mehrere Metallpigmente, umfasst, wobei insbesondere die zweite flüssige härtbare Beschichtung eine transparente flüssige härtbare Beschichtung ist.

4. Dekoratives Hochdrucklaminat(HPL)-Paneel nach einem der Ansprüche 1-3, wobei das Härten bei Schritt iv) ein Schritt des teilweisen Härtens der ersten flüssigen härtbaren Beschichtung ist.

5. Dekoratives Hochdrucklaminat (HPL)-Paneel nach einem der Ansprüche 1-4, wobei die erste flüssige härtbare Beschichtung Komponenten ausgewählt aus der Gruppe von thermisch und Strahlungs-härtbaren Komponenten, vorzugsweise ausgewählt aus der Gruppe von Elektronenstrahlen-härtbaren Harzen und UV-härtbaren Harzen, umfasst, wobei die zweite flüssige härtbare Beschichtung Strahlungs-härtbare Komponenten ausgewählt aus der Gruppe von Elektronenstrahlen-härtbaren Harzen und UV-härtbaren Harzen umfasst, wobei die zweite flüssige härtbare Beschichtung vorzugsweise Komponenten ausgewählt aus der Gruppe von (Meth)acrylaten, Urethanen und Phenol-Formaldehydharzen oder Kombinationen davon umfasst, wobei die erste flüssige härtbare Beschichtung insbesondere eine lösungsmittelfreie härtbare Beschichtung ist.

6. Dekoratives Hochdrucklaminat(HPL)-Paneel nach einem der Ansprüche 1-5, wobei das Härten bei Schritt vi) ein Schritt des vollständigen Härtens der ersten flüssigen härtbaren Beschichtung und der zweiten flüssigen härtbaren Beschichtung ist.

7. Dekoratives Hochdrucklaminat(HPL)-Paneel nach einem der Ansprüche 2-6, wobei die Außenfläche des nach Schritt vii) erhaltenen Produkts gleichmäßig, insbesondere flach, ist.

8. Dekoratives Hochdrucklaminat(HPL)-Paneel nach einem der Ansprüche 1-7, wobei bei Schritt ii) die erste flüssige härtbare Beschichtung in einer Dicke von 20 - 150 g/m² aufgebracht wird, wobei bei Schritt vi) die zweite flüssige härtbare Beschichtung in einer Dicke von 10 - 100 g/m² aufgebracht wird.

9. Dekoratives Hochdrucklaminat(HPL)-Paneel nach einem der Ansprüche 1-8, wobei bei Schritt i) das Substrat ausgewählt ist aus der Gruppe von Metallfolie, wie z.B. Aluminiumfolie, Polymerfolie, wie z.B. Polycarbonatfolie, und Papiersubstrat, insbesondere einem Papiersubstrat ausgewählt aus der Gruppe von Kraftpapier und Dekorpapier, vorzugsweise in einem Gewichtsbereich von > 40 g/m² und < 260 g/m², bevorzugter < 150 g/m².

## Revendications

1. Panneau de stratifié haute pression (HPL) décoratif, comprenant une couche décorative la plus à l'extérieur et une couche centrale, où la couche décorative la plus à l'extérieur comprend un décor fabriqué selon un procédé de fabrication d'un décor, comprenant :
i) la fourniture d'un substrat ;
ii) l'application d'un premier revêtement durcissable liquide sur ledit substrat de i) ;
iii) le placement d'un élément ayant une surface structurée sur ledit revêtement liquide de ii) ;
iv) le durcissement de la première résine de revêtement durcissable liquide tout en mettant en contact l'élément avec le revêtement durcissable liquide de sorte qu'un produit intermédiaire soit produit, où le revêtement durci du produit intermédiaire produit a une texture de surface qui est en relief avec la surface structurée de l'élément ;
v) le retrait de l'élément ayant la surface structurée ;
vi) l'application d'un deuxième revêtement durcissable liquide sur la texture de surface du produit intermédiaire ;
vii) le durcissement du produit de vi) de sorte que la texture de surface obtenue en iv) soit intégrée dans le deuxième revêtement durci.

2. Panneau de stratifié haute pression (HPL) décoratif selon la revendication 1, dans lequel l'étape vi) comprend l'application d'une couche de libération, la couche de libération étant munie du deuxième revêtement durcissable liquide, de sorte que le deuxième revêtement durcissable liquide soit en contact avec la texture de surface du produit intermédiaire, où en particulier, ledit procédé comprend en outre une étape viii) de retrait de la couche de libération du produit durci dans l'étape vii).

3. Panneau de stratifié haute pression (HPL) décoratif selon l'une quelconque des revendications 1-2, dans lequel le premier revêtement durcissable liquide comprend des pigments, de préférence un ou plusieurs pigments métalliques, où en particulier, le deuxième revêtement durcissable liquide est un revêtement durcissable liquide transparent.

4. Panneau de stratifié haute pression (HPL) décoratif selon l'une quelconque des revendications 1-3, dans lequel le durcissement dans l'étape iv) est une étape de durcissement partiel du premier revêtement durcissable liquide.

5. Panneau de stratifié haute pression (HPL) décoratif selon l'une quelconque des revendications 1-4, dans lequel le premier revêtement durcissable liquide comprend des composants choisis dans le groupe des composants durcissables par voie thermique et par rayonnement, de préférence choisis dans le groupe des résines durcissables par faisceau d'électrons et des résines durcissables aux UV, où le deuxième revêtement durcissable liquide comprend des composants durcissables par rayonnement choisis dans le groupe des résines durcissables par faisceau d'électrons et des résines durcissables aux UV, ledit deuxième revêtement durcissable liquide comprenant de préférence des composants choisis dans le groupe des (méth)acrylates, des uréthanes et des résines phénol-formaldéhyde, ou des combinaisons de ceux-ci, où en particulier le premier revêtement durcissable liquide est un revêtement durcissable sans solvant.

6. Panneau de stratifié haute pression (HPL) décoratif selon l'une quelconque des revendications 1-5, dans lequel le durcissement dans l'étape vi) est une étape de durcissement complet du premier revêtement durcissable liquide et du deuxième revêtement durcissable liquide.

7. Panneau de stratifié haute pression (HPL) décoratif selon l'une quelconque des revendications 2-6, dans lequel la surface externe du produit obtenu après l'étape vii) est régulière, en particulier plate.

8. Panneau de stratifié haute pression (HPL) décoratif selon l'une quelconque des revendications 1-7, dans lequel, dans l'étape ii), le premier revêtement durcissable liquide est appliqué dans une épaisseur de 20 - 150 g/m², où, dans l'étape vi), le deuxième revêtement durcissable liquide est appliqué dans une épaisseur de 10 - 100 g/m².

9. Panneau de stratifié haute pression (HPL) décoratif selon l'une quelconque des revendications 1-8, dans lequel, dans l'étape i), le substrat est choisi dans le groupe de feuille métallique, telle qu'une feuille d'aluminium, une feuille polymère, telle qu'une feuille de polycarbonate, et de substrat en papier, en particulier un substrat en papier choisi dans le groupe de papier kraft et de papier décoratif, de préférence dans une plage de poids > 40 g/m² et < 260 g/m², plus préférablement < 150 g/m².
